# EUROPEAN PATENT APPLICATION

(11) **EP 2 669 791 A1**
(43) Date of publication of application: **04.12.2013**
(21) Application number: 12170433.2
(22) Date of filing: 01.06.2012
(51) Int. Cl.: G06F 9/44, G06F 21/00

(54) **System and method for tracking compliance information for a build-system product**

(71) Applicant: QNX Software Systems Limited, Kanata, Ontario K2K 0B3 (CA)
(72) Inventor: Russell, Keith Roderick, Kanata, Ontario K2K 0B3 (CA); Johnson, Eric Anthony, Kanata, Ontario K2K 0B3 (CA); Michalyshyn, Michael Paul, Kanata, Ontario K2K 0B3 (CA)
(74) Representative: Patel, Binesh

(57) **Abstract**

Systems and methods for tracking compliance information for a build-system product are described. The compliance information is associated with one or more source code files used to build the build-system product. Tracking information is created for the build-system product including a source code identifier for each source code file that contributes to the build-system product. The tracking information can be utilized to identify the source codes files that contributed to the build-system product and identify the associated compliance information.

## Description

### TECHNICAL FIELD

The current disclosure relates to generation of software programs in a software build system, and in particular relates to a system and method for associating compliance information with the build-system products of the software build system.

### BACKGROUND

Various types of compliance information can be associated with software source code files. The compliance information can include, for example, software license terms, distribution restrictions, export restrictions, intellectual property rights identifiers and other similar information.

Application and enforcement of this compliance information may extend to executable or binary files derived from the source code files as well. The executable and binary files are derived from one or more source code files by a build system. In many build systems the build-system products such as an executable and binary files do not preserve an indication of which source code files contributed to the executable and binary files and therefore identifying the compliance information that applies to the executable and binary files is problematic.

Therefore there is a need for an improved system and method for tracking compliance information for a build-system product.

### SUMMARY

In accordance with an aspect of the present disclosure there is provided a method, executable on one or more processors, for tracking compliance information associated with a plurality of source code files that contribute to building a build-system product, the method comprising: generating a unique compliance identifier for each of a plurality of compliance information items; and associating one or more compliance identifiers with each of a plurality of source code files; creating tracking information related to the build-system product, the tracking information including a source code identifier for each of the plurality of source code files that contribute to the building of the build-system product.

In accordance with another aspect of the present disclosure there is provided a system for tracking compliance information associated with a plurality of source code files that contribute to a build-system product, the system comprising: a compliance information repository containing a unique compliance identifier for each of a plurality of compliance information items; a source code repository containing the plurality of source code files used for creating the build-system product, each of the plurality of source code files having an associated one or more compliance identifiers from the compliance information repository; and a build component for creating tracking information related to the build-system product, the tracking information including a source code identifier for each of the plurality of source code files to identify a respective source code file that contributes to the building of the build-system product.

In accordance with yet another aspect of the present disclosure there is provided a computer readable memory containing instructions for execution on one or more processors, the instructions for tracking compliance information associated with a plurality of source code files that contribute to a build-system product, the instructions comprising: generating a unique compliance identifier for each of a plurality of compliance information items; and associating one or more compliance identifiers with each of a plurality of source code files; creating tracking information related to the build-system product, the tracking information including a source code identifier for each of the plurality of source code files that contribute to the building of the build-system product.

### BRIEF DESCRIPTION OF THE DRAWINGS

Further features and advantages of the present disclosure will become apparent from the following detailed description, taken in combination with the appended drawings, in which:
Figure 1 depicts a system for tracking compliance information;
Figure 2 depicts components of a compliance information association system;
Figure 3 depicts the association of markers and compliance information;
Figure 4 depicts components of a trace system for tracing compliance information associated with build-system product;
Figure 5 depicts a method of associating compliance information from a plurality of source code files with build-system product; and
Figure 6 depicts a method of tracing compliance information associated with build-system product.

### DETAILED DESCRITPTION

One or more of source code files, or object files used to build a build-system product may have associated terms, conditions or restrictions on their use, distribution, or redistribution, that need to be complied with. A build-system product built from these source or object files may inherit the terms, conditions, or restrictions. For example, a source code file may provide encryption functionality, which may have various government export restrictions that must be complied with. A build-system product built using the encryption functionality source code file may inherit these export restrictions. Similarly, a source code file may be associated with intellectual property, for example code that may be covered under patent, copyright or trademark licenses may have various restrictions that must be complied with in order to use the source code file. The use and re-distribution of source code contained in a source code file may be governed by one or more software license agreements including, for example, commercial software licensing agreements, open source licenses or free software licenses. A build-system product built from source code files having various terms, conditions or restrictions may inherit the terms, conditions or restrictions of the source code files. The terms, conditions or restrictions may need to be complied with in order to use, modify and/or distribute the built build-system product, or the files associated with building the build-system product. The information indicating the various terms, conditions and/or restrictions associated with a source code file is referred to as compliance information.
Systems and methods are described herein that are used in tracking compliance information for a build-system product. The tracking of the compliance information may comprise associating compliance information of source code files and/or object files with a build-system product. The tracking of the compliance information may further comprise tracing the compliance information associated with the build-system product once it is built. The build-system product may be built from a sub-set of possible source code files and/or previously compiled object files. It may be difficult or impractical to explicitly specify all of the source code files or object files used in building a particular build-system product. As such, the build process is able to determine required source code files or object files to include in the build process. For example, a build-system product may be built by specifying one or more source code files or object files and their associated versions to include when building a build-system product. The build process may then determine additional source code files or object files that need to be included based on the specified source code files and object files based, for example, on dependency relationships. As will be appreciated, if different source code files and/or object files are specified, or even simply different versions, the source code files and object files included in building the build-system product may vary.

The compliance information of source code files and/or object files used to build a build-system product can be associated with the built build-system product. The compliance information associated with a build-system product built according to the systems and methods described herein can be traced to determine compliance information of the build-system product that was derived from the source code files and/or object files used in the build process. As an example, a build-system product could be built from source code files covered by two different software licenses. When the build-system product is built according to the present systems and methods the resultant build-system product could be inspected to trace back the license information based upon the source code files used to create the build-system product in order to provide a list, or other identification, of the different licenses that cover portions of the build-system product. The systems and method may be used to generate, for example, a software license guide for the build-system product.

The compliance information associated with individual source or object files, including individual versions of the source and object files, can be associated with one or more build-products that results from the build system processing the source and/or object files. The build-system product may include one or more of each of a linked binary, a library, a component, a package, a debug file or other output of a build process.

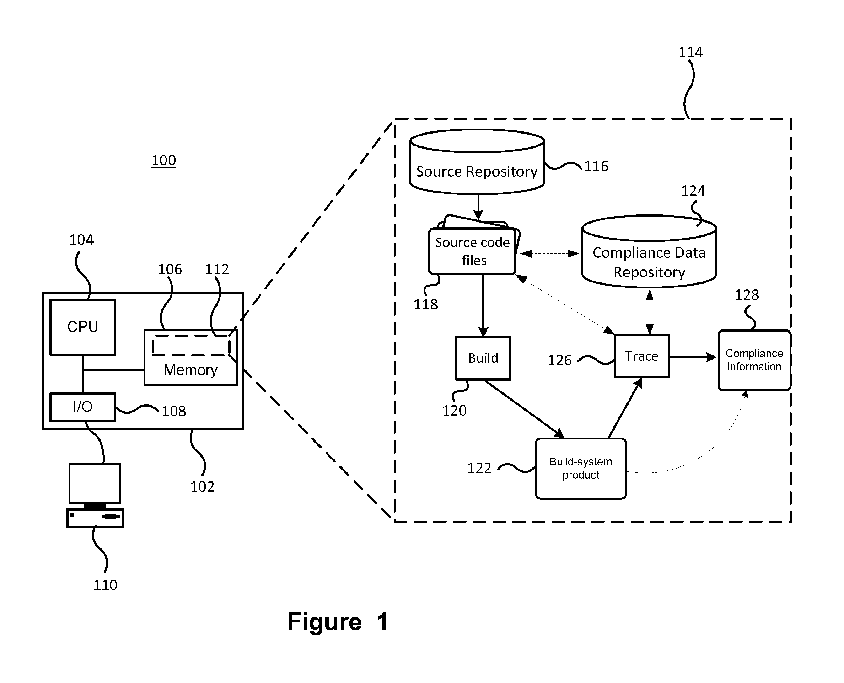

Figure 1 depicts a system for tracking compliance information for a build-system product. The illustrative system 100 as depicted comprises a computing system 102 comprising a central processing unit (CPU) 104 coupled to memory 106 and an input/output (I/O) interface 108. A display 110 may be connected to the computing system 102. The computing device 102 may be, for example, a development workstation used by a developer when developing a build-system product or part of a dedicated software build (a.k.a. software configuration management) environment. The memory 106 stores instructions 112, that when executed by the CPU 104, configure the computing system 102 to provide functionality 114 for tracking compliance information. The tracking of the compliance information may include associating compliance information of one or more source code files and/or object files with a build-system product, and tracing the associated compliance information from the build-system product.

The system for tracking compliance information for a build-system product 114 may include various components. For example a source repository 116 may store a plurality of source code files 118, each of which may have various different versions. One or more of the source code files, or previously compiled object files, stored in the repository may be retrieved 118 and used by a build system 120 to generate one or more build-system products 122. As described further herein, the build-system product 122 may include associated tracking information. One or more of the source code files 118 used in building the build-system product 122 is associated with compliance information that may be stored in a compliance data repository 124. As described further herein each of the one or more source code files 118, having associated compliance information, has tracking information associated with each source code file in order to associate the resulting build-system product 122 to the compliance information of the individual source code files. Reference to individual source code files includes different versions of the same source code file that may each have different associated compliance information.

A trace tool 126 can be used to determine compliance information 128 associated with a build-system product 122 using the tracking information. The trace tool 126 may determine the tracking information associated with the source code files of the build-system product and use the determined tracking information to retrieve the compliance information 128 associated with the source code files from the compliance data repository 124.

As set forth above, the compliance information tracking functionality 114 may be used to identify compliance information 128 associated with a build-system product 122. The compliance information 128 may be various information indicating terms, conditions or restrictions that should or must be complied with. For example, the compliance information could include one or more of licensing information, export control information, or patent information.

Although depicted as having a single CPU 104 and associated memory 106, the computing system 102 may be provided by multiple processors or multiple computing devices connected together. Further, the various components of the compliance information tracking system may be provided by separate computing systems. For example, the source code repository 116 may be provided on a server, while the build tool 120, providing function such as a complier, assembler and linker to create the build-system product 122, may be provided on a developer's workstation or software configuration server.

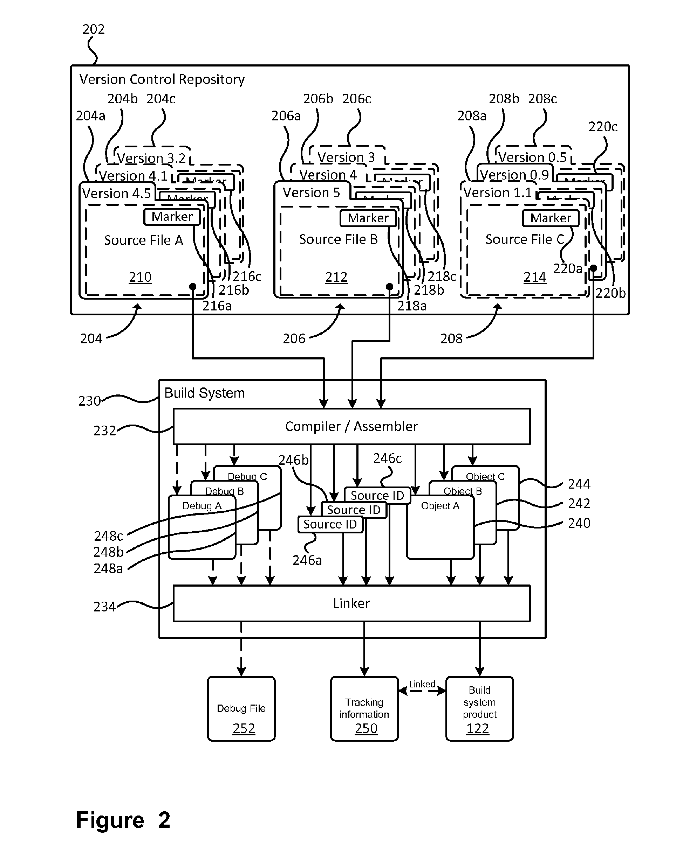

Figure 2 depicts components of a compliance information association system. The compliance information association system may include a version control repository (a.k.a. a version controlled source code repository) 202. The version control repository 202 may store a plurality of source code files 204, 206, 208. For each source code file 204, 206, 208, the version control repository 202 may store various different versions, for example 204a-c, 206a-c and 208a-c, of the source code files. A source code file 204, 206, 208, or source code file version, may include associated source code 210, 212, 214 and compliance identifiers, represented as markers, 216a-c, 218a-c, 220a-c. Each marker 216a-c, 218a-c, 220a-c provides identification of a compliance identification items for associating compliance information with the respective source code file. Each marker 216a-c, 218a-c, 220a-c may be embedded in the source code of the respective source code file version.

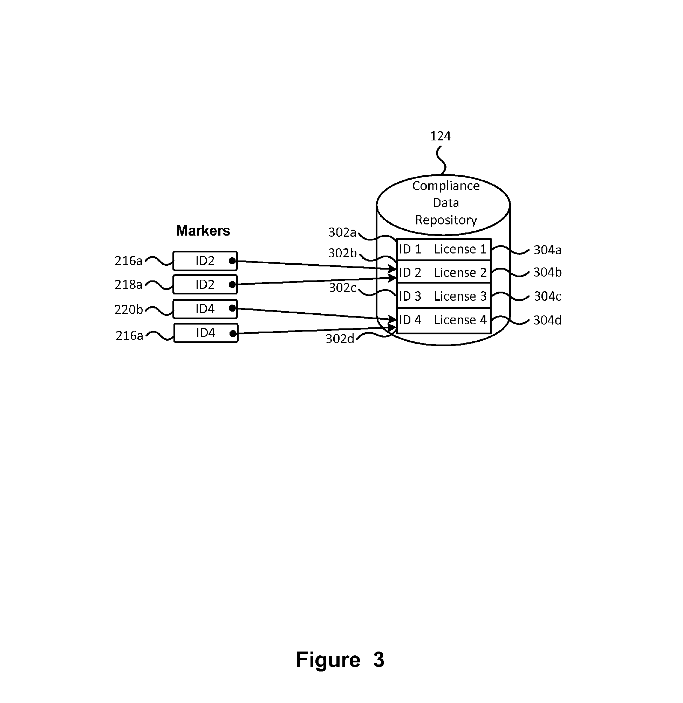

Referring to Figure 3, the association of markers, compliance identifiers, and compliance information is shown which is depicted as being licensing information. Each of the markers 216a, 218a and 220b may be an identifier 302a-d of a respective compliance identification items, for example licensing records 304a-d, stored in a compliance data repository 124. As depicted, one or more of the markers 216a, 218a may indicate the same license identifier 302b and multiple identifiers may be associated with marker 216a identifying license identifiers 304b and 304d. Different source code files may be associated with the same license information by embedding or associating the same marker in the associated source code file. Each of the licensing records 304a-d stored in the compliance data repository 124 may store information associated with a compliance item such as a particular license. For example, one license record 304a may be associated with the GNU Public License (GPL) version 2, another license record 304b may be associated with the GNU version3, another license 304c may be associated with the BSD license and another 304d may be associated with a commercial license.

Returning to Figure 2, each source code file 204, 206, 208, or more particularly each source code version, may have one or more embedded markers each being a pointer, such as a universal resource identifier and a revision number to a respective licensing record of a license repository as described above with reference to Figure 3. The markers provide information that allows the licensing records, or compliance information, of individual source code files to be associated with a build-system product built from the source code files. Although the markers are depicted as being part of the source files, in an alternative embodiment they may be associated with the compliance information by identifiers maintained in a repository (e.g. a database) rather than using the markers embedded in the source code files. The repository may provide the association between the source files and the compliance information by identifying the source code identifiers and the corresponding compliance identifiers rather than embedded in the source files. The compliance information identifiers can therefore be maintained in a repository provided for example in a dedicated database, a version control system database, or in combination with the compliance data repository.

The compliance information association system further comprises a build system 230. The build system 230 may comprise a compiler / assembler 232 for compiling object files from source code files and a linker 234 for linking the compiled object files into a build-system product 122. The build system 230 may provide a plurality of files, including the build-system product 122 such as one or more of a processor executable file, a binary file, an object file, a static library file, and a linkable library file. The compiler / assembler 232 compiles the source code of the required source code file versions 204a, 206a, 208b. The compiler / assembler 232 output is stored into associated object files 240, 242, 244. The compiler / assembler 232 may also generate debug information 248a-c for the compiled object files 240, 242, 244. Tracking information 250 providing a source code identifier (a.k.a. source ID) 246a-c associated with each file used to generate the build-system product 122 is created and may be linked to the build-system product 122. The tracking information 250 may be embedded in the build-system product 122, embedded with a debug file 252, or provided in a separate file (as illustrated) as an output product of the build system 230.

Once the compiler / assembler 232 generates the objects files 240, 242, 244, source IDs 246a-c and debug information 248a-c, the linker 234 may then generate the build-system product 122. The build-system product 122 may include a binary file, an object file, a static library file, and a linkable library file. The linker 234 may link the object files 240, 242, 244 into a build-system product 122, such as a binary file. The linker 234 may also embed the source ID 246a-c into a build-system product 122, or keep it as a separate tracking information 250 file. The tracking information 250 is associated with the generated build-system product 122 so that the source IDs 246a-c can be retrieved given the build-system product 122. The linker 234 may also generate a debug file 252 from the debug information 248a-c associated with the object files 240, 242, 244. The tracking information 250 may be associated with the build-system product 122 in various ways, such as embedding a common unique identifier in the tracking information 250 and build-system product 122, embedding the tracking information 250 within the build system product itself, embedding the tracking information in the associated debug file 252.

As will be appreciated from the above, source code files 204a-c, 206a-c, 208a-c may have one or more markers 216a-c, 218a-c, 220a-c, embedded within the associated source code. Each of the markers 216a-c, 218a-c, 220a-c, may be associated with a record specifying compliance information of the source code files 204a-c, 206a-c, 208a-c. When a build-system product 122 is built from a subset of the source code files 204a, 206a, 208b stored in a source code file repository, the source code identifier, source id 246a-246c, for each of the files are associated with the resultant build-system product 122 in the tracking information 250. As a result, the compliance information 128 of the build-system product 122 can be determined from the associated markers 216a, 218a, 220b from the source code files 204a, 206a, 208b. Since the associated compliance information is traceable with the build-system product 122, based on the source code files used in the build process, if a different source code file, or version of a source code file 204a, 206a, 208b, with different compliance information is included in a particular build of the build-system product 122, the tracking information 250 associated with the built build-system product 122 will reflect the different compliance information.

Alternatively, the compiler may embed the tracking information, in particular the source ids 246a-c into the compiled object files 240, 242, 244. When the linker 234 links the object files 240, 242, 244 into the build-system product 122, it may collect all of the extracted or generated source ids 246a-c that are then embedded within the build-system product 122. The tracking information 250 may be embedded into the build-system product 122 as metadata, or embedded data that does not affect the execution of the build-system product 122. Since the extracted markers 216a, 218a, 220b are included in the build-system 122, the build-system product 122 can be examined in order to determine the source code files and/or object files used in building the build-system product and so determine the associated compliance information.

As describe above, the source ids 246a-c may be generated from a source code file location identifier, such as a Universal Resource Locator (URL) and a version identifier of the source code file. The source ids 246a-c may also be generated from a hash of the source code file location and the version identifier of the source code file. The source code file location identifier may also be encrypted and not directly viewable within the build-system product 122. The source ids 246a-c do not point directly to a compliance information record, but rather may point to a source code file from which the marker 216a, 218a, 220b can be determined or identify a linking record that in turn specifies the compliance record or records associated with the particular source code file version.

Although specific components for associating the compliance information with a build-system product have been described above, it is contemplated that other implementations are possible. For example, determining the source identifiers associated with the source code files, object files or executable binaries used in building the build-system product, has been described as being performed by a compiler or assembler; however, it is contemplated that the determination may be provided by a separate component. Similarly, the linking of the source identifiers into the tracking information associated with the build-system product has been described as being performed by a linker; however, it is contemplated that the linking of the tracking information and association with the build-system product may be performed by a separate component.

As will be appreciated, when building a build-system product, the linker may not have an explicit list of all files to include in building the build-system product. Rather, one or more files may be specified, and the linker determines which additional files are required by the specified one or more files. This process may continue until all of the files required to build the build-system product are included.

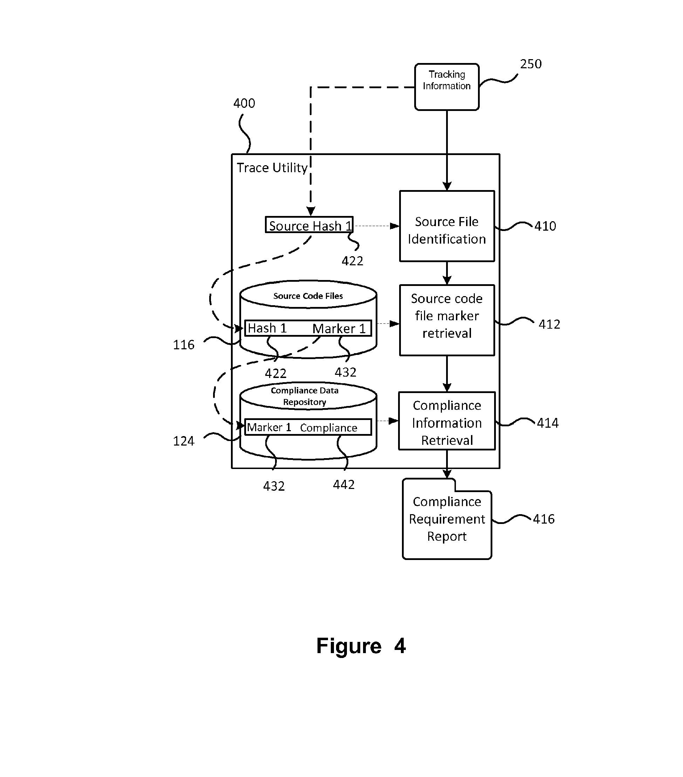

Figure 4 depicts components of a tracing system (a.k.a. a trace utility) 400 for tracing compliance information associated with a build-system product 122. As depicted the trace system 400 receives tracking information 250 associated with a build-system product 122 such as a processor executable file, a binary file, an object file, a static library file, a linkable library file or a debug file. The build-system product 122 is associated with tracking information 250 as described above. The tracking information file 250 may be embedded in the actually binary file or linked by way of a unique tracking information 250 file identifier embedded in the files of the build-system product 122. The trace system 400 receives the build-system product 122 and retrieves the tracking information 250 associated with the build-system product 122. From the tracking information 250, a source code file identification component 410 determines the source code file identifiers, such as a source code file hash 422, each of which identifies a source code file that was utilized to generate the build-system product 122 from a source code file repository 116. Source code file marker retrieval component 412 retrieves markers 432 identified from each of the source code files 116. Alternatively, the source code file marker retrieval component 412 may retrieve the compliance identifiers from a database maintaining the association between source code file hash 422 and the compliance identifiers. Compliance identifiers, markers 432, are extracted from the source code files or from a look up in a database associating each hash 422 with the associated markers 432 for each source code file. The determined markers 432 are then used to determine the associated compliance information 442 from the compliance data repository 124 by a compliance information retrieval component 414. The compliance information retrieval component 414 may generate a compliance requirement report or compliance list 416, or other report, of the compliance information records retrieved from the compliance information repository 124. The compliance requirement report may comprise a software license guide for the build-system product.

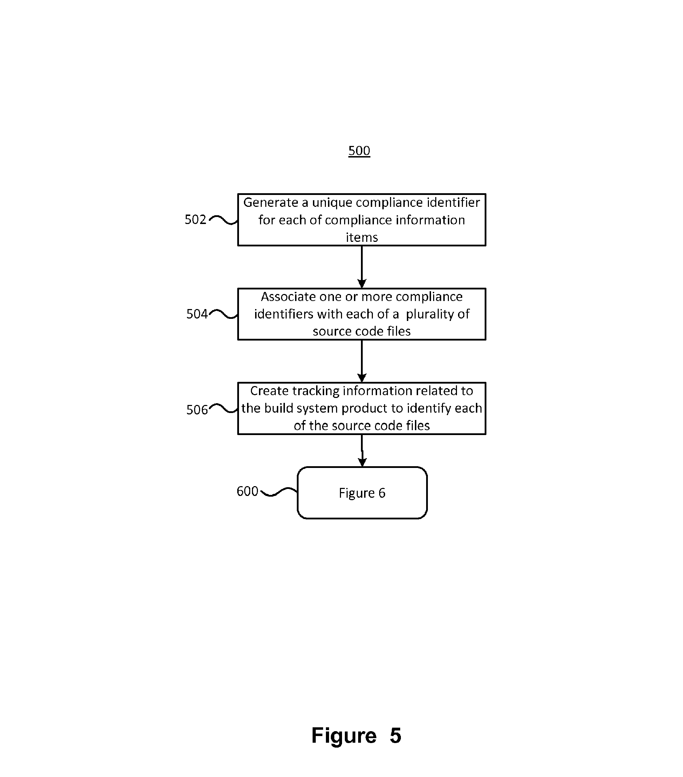

Figure 5 depicts a method of associating compliance information from a plurality of source code files with a build-system product. A unique compliance identifier is generated for each compliance information item (502) in a compliance data repository 124. The compliance information items include any one or more of a software license agreement, software distribution restrictions, export restrictions, and an intellectual property rights identifier. One or more of the compliance identifiers are then associated with each of a plurality of source code files (504). The source code file 118, may comprise a source file, a header, a make file, a static library file or a linkable library file. Tracking information 250 is then be created related to a build-system product. The tracking information 250 may include a source code identifier for each of the plurality of source code files 118 that contribute to the building of the build-system product (506). For example the tracking information 250 may comprise a Universal Resource Locator (URL) and a version identifier of a source code file or a hash code used to identify the location of the source code file. The tracking information 250 may also be encrypted. The tracking information 250 may be contained in or associated with any one of a processor executable file, a binary file, an object file, a static library file, and a linkable library file.

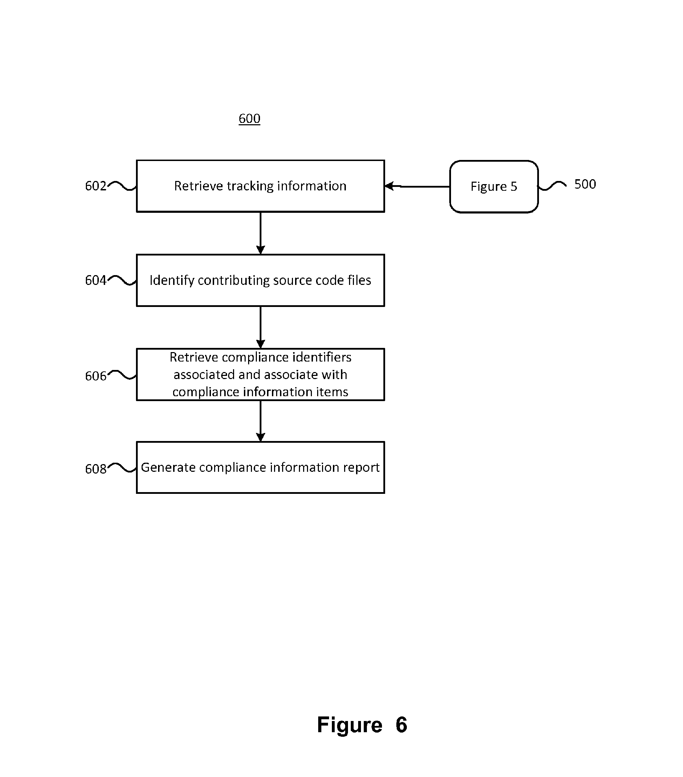

Figure 6 depicts a method of tracing compliance information associated with a build-system product. As described above, the tracking of compliance information may comprise associating the compliance information from a plurality of source code files 118 used to build a build-system product 122. The tracking of compliance information may further comprise tracing the compliance information associated with a build-system product 122. The method 600 begins with retrieving tracking information from the build-system product (602) or from a file 250 associated with the build-system product 122. Contributing source code files 118 can then be identified (604) from the tracking information 250. The source code files 118 may be identified in the tracking information 250 by a source code file identifier that uniquely identifies the file or the location of the file. The compliance identifiers, or markers, associated with each of the source code files 118 is retrieved using the source code identifiers (606). The compliance identifiers may be retrieved from the source code files 118 containing the markers or from a database identifying the source code file and the associated compliance identifiers. The compliance information items can then be identified for the compliance identifiers from the compliance data repository 124 and then be utilized to generate a compliance information report (608).

In some embodiments, any suitable computer readable media can be used for storing instructions for performing the processes described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, and any suitable media that is fleeting and devoid of any semblance of permanence during transmission, and/or any suitable intangible media.

Although the description discloses example methods, system and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

## Claims

1. A method, executable on one or more processors (104), for tracking compliance information associated with a plurality of source code files (118) that contribute to building a build-system product (122), the method comprising:
generating (502) a unique compliance identifier (432) for each of a plurality of compliance information items (442); and
associating (504) one or more compliance identifiers (432) with each of a plurality of source code files (118);
creating (506) tracking information related to the build-system product (122), the tracking information (128) including a source code identifier (422) for each of the plurality of source code files (118) that contribute to the building of the build-system product (122).

2. The method of claim 1, where each of the plurality of compliance information items includes any one or more of: a software license agreement, software distribution restrictions, export restrictions, and an intellectual property rights identifier.

3. The method of claim 1 or 2, further comprising:
storing each of the plurality of compliance information items in a compliance information repository;
where each of the plurality of compliance information items is retrievable from the compliance information repository using the corresponding compliance identifier.

4. The method of any one of claims 1 to 3, further comprising:
retrieving the compliance information items associated with each of the source code files that contribute to the build-system product from the compliance information repository using the source code identifiers included in the tracking information and the compliance identifiers associated with each of the source code files.

5. The method of any one of claims 1 to 4, where the build-system product is any of: a processor executable file, a binary file, an object file, a static library file, and a linkable library file.

6. The method of any one of claims 1 to 5, where the build-system product is built by a build system including any one or more of: a compiler, assembler and a linker.

7. The method of any one of claims 1 to 6, where each source code identifier includes a hash or a source code file name identifier and a source code file version identifier.

8. The method of claims 7, where each of the plurality of source code files is stored in a source code repository and is accessible in the source code repository using the corresponding source code identifier.

9. The method of claims 7 or 8, where each source code identifier is encrypted.

10. The method of any one of claims 1 to 7 where each of the plurality of source code files identifiers is associated in a database with compliance identifiers, the compliance identifiers retrieved from the database to identify the associated compliance information items.

11. The method of any one of claims 1 to 10, where the tracking information is embedded in the build-system product or is contained in a debug information file related to the build-system product.

12. The method of any one of claims 1 to 11, where each of the source code files comprises any of a source code file, a header file, a make file, a static library file or a linkable library file.

13. The method of any one of claims 1 to 12, wherein the compliance items are used to generate a software license guide for the build-system product.

14. A computer readable memory containing instructions for execution on one or more processors, the instructions for tracking compliance information associated with a plurality of source code files that contribute to a build-system product, the instructions executing the steps of any of method claims 1 to 13.

15. A system for tracking compliance information associated with a plurality of source code files that contribute to a build-system product (122), the system comprising:
a compliance information repository (124) containing a unique compliance identifier for each of a plurality of compliance information items;
a source code repository (116) containing the plurality of source code files (118) used for creating the build-system product (122), each of the plurality of source code files (118) having an associated one or more compliance identifiers from the compliance information repository (124); and
a build component (120) for creating tracking information related to the build-system product (122), the tracking information including a source code identifier for each of the plurality of source code files (118) to identify a respective source code file that contributes to the building of the build-system product (122).
